# DEMANDE DE BREVET EUROPEEN

(11) **EP 0 965 271 A1**
(43) Date de publication de la demande: **22.12.1999**
(21) Numéro de dépôt: 99430009.3
(22) Date de dépôt: 18.06.1999
(51) Int. Cl.: A23B 4/16, A23B 4/06

(54) **Procédé de conservation de mollusques bivalves vivants et colis obtenus**

(30) Priorité: 19.06.1998 FR 9807951
(71) Demandeur: Nautilia Groupe Les Paysans De La Mer, 84000 Avignon (FR)
(72) Inventeur: Guillen, Jean-François, 84000 Avignon (FR)
(74) Mandataire: Domange, Maxime

(57) **Abrégé**

Le secteur technique de l'invention est le domaine de la conservation des mollusques bivalves vivants.

La présente invention a pour objet un procédé de conservation de mollusques bivalves vivants et les colis de mollusques bivalves vivants obtenus par un tel procédé.

L'invention consiste en un procédé de conservation de mollusques bivalves vivants dans un emballage étanche aux gaz, dans lequel on introduit de l'azote gazeux.

## Description

La présente invention a pour objet un procédé de conservation de mollusques bivalves vivants et les colis de mollusques bivalves vivants obtenus par un tel procédé.

Le secteur technique de l'invention est le domaine de la conservation des mollusques bivalves vivants.

La présente invention est plus particulièrement relative à la conservation des moules et des huîtres.

Le brevet européen EP 471 611 décrit un procédé de conservation et de traitement de mollusques bivalves vivants dans un emballage fermé, comportant une partie formant corps creux ouvert, une autre partie formant couvercle thermosoudable sur le corps creux, l'emballage étant muni d'un moyen d'introduction de gaz et d'un moyen d'expulsion de l'air, le procédé comprenant les étapes consistant à :
- remplir partiellement la partie formant corps creux, de dimension adaptée, avec de l'eau, le niveau de l'eau étant tel que l'emballage comporte à sa partie supérieure un espace contenant de l'air ;
- mettre au moins un mollusque bivalve vivant dans l'eau contenue dans ladite partie formant corps creux, et
- remplacer l'air contenu dans l'emballage par un gaz de composition contrôlée, par l'intermédiaire des moyens d'introduction de gaz et d'expulsion de l'air.

Le procédé décrit dans ce document est caractérisé en ce qu'on effectue, après avoir placé les mollusques dans le corps creux, les étapes suivantes :
- fermer l'emballage de manière étanche à l'eau et au gaz à l'aide du couvercle,
- extraire l'air contenu dans l'emballage fermé par l'intermédiaire d'une soupape bidirectionnelle commandée prévue dans une paroi dudit emballage et fonctionnant comme moyens d'introduction de gaz et d'expulsion de l'air, puis
- introduire dans l'emballage fermé, un gaz de composition contrôlée, choisi parmi l'oxygène et l'ozone par l'intermédiaire de la soupape.

Comme décrit dans ce document, le gaz introduit dans l'emballage est de l'oxygène ou bien un mélange d'au moins deux gaz, dont un sert à oxygéner l'eau, l'oxygène constituant un bactéricide ; selon ce document, il est possible de conserver des huîtres pendant quatre semaines, sans nuire à leur qualité et en permettant ensuite de les commercialiser en les conservant à l'air libre selon les usages actuels pendant environ quinze jours dans un endroit frais.

Ce document décrit également un emballage destiné à la mise en oeuvre de ce procédé, qui comporte une partie formant corps creux ouvert en matière plastique, une autre partie formant couvercle thermosoudable sur le corps creux, et une soupape située dans le couvercle, qui est de type bidirectionnel commandée.

La pratique montre cependant que les résultats présentés dans ce document ne peuvent être obtenus, en particulier avec des moules.

Par ailleurs, le brevet français 2.648.315 propose un procédé de conservation d'animaux aquatiques, tels que les poissons, crustacés, coquillages, à l'état vivant, sans immersion, dans lequel :
- les animaux sont disposés dans un caisson ou l'on abaisse la pression absolue jusqu'à une valeur comprise entre 4,5 et 8 millibars, tout en conservant une pression partielle d'eau supérieure à 4,5 millibars,
- on laisse revenir le caisson à la pression atmosphérique,
- on enferme les animaux dans un emballage comportant une ouverture sur un de ses côtés, et
- cette ouverture est fermée par une membrane d'élastomère silicone, d'environ 50 microns d'épaisseur, et dont la surface est déterminée pour que la concentration de gaz carbonique reste inférieure à 1 %, l'ensemble étant maintenu ultérieurement à 0°C.

Les moules en particulier ne se conservent avec les procédés actuellement utilisés, que deux ou trois jours après lesquels les conditions sanitaires aptes à assurer la sécurité du consommateur ne sont plus garanties.

La présente invention a donc pour objectif de proposer un nouveau procédé de conservation et d'emballage de mollusques bivalves vivants, en particulier de moules, qui soit amélioré.

La présente invention a également pour objectif de proposer des colis de mollusques bivalves vivants, dont la capacité de conservation soit prolongée.

Selon un premier aspect, l'invention consiste à mettre en oeuvre un procédé d'emballage en vue de la conservation de mollusques bivalves vivants dans un conteneur sensiblement étanche aux gaz, dans lequel on introduit de l'azote gazeux dans l'emballage (ou conteneur), de préférence avant sa fermeture.

Selon un autre aspect de l'invention, il est proposé un procédé d'emballage destiné à améliorer la conservation de mollusques bivalves vivants tels que des moules, dans un conteneur sensiblement étanche au gaz, dans lequel on introduit dans l'emballage du dioxyde de carbone (anhydride carbonique).

L'invention repose sur la constatation surprenante qu'il est possible d'améliorer la conservation des moules et mollusques similaires, en les maintenant dans une atmosphère gazeuse essentiellement constituée d'azote, ou bien de dioxyde de carbone, ou encore d'un mélange des deux, le cas échéant additionné d'oxygène.

Il est en effet connu que le dioxyde de carbone a des effets néfastes et/ou toxiques sur les animaux et que selon le document FR 2.648.315, la dose létale pour les animaux aquatiques tels que poissons, crustacés et coquillages serait de 2 % pendant deux à quatre heures.

En outre, la plupart des procédés connus d'emballage de mollusques sous atmosphère gazeuse déterminée, sont basés sur l'utilisation d'oxygène qui n'est nullement nécessaire dans le procédé selon l'invention.

Le procédé selon l'invention ne nécessite aucunement l'emploi d'agents conservateurs susceptibles d'être placés au contact des mollusques et/ou de se mélanger à ceux-ci.

Le procédé selon l'invention ne nécessite pas non plus d'immerger les mollusques dans l'eau et permet ainsi d'alléger les colis ; ceux-ci (les conteneurs) peuvent être réalisés à base de carton revêtu de matière plastique, et peuvent contenir de 250 grammes à 10 ou 15 kilogrammes de mollusques vivants, dans un volume réduit.

Selon des modes préférentiels de réalisation :
- on exécute successivement les opérations suivantes :
   * on dispose des mollusques dans un emballage,
   * on extrait l'air contenu dans l'emballage,
   * on injecte l'azote gazeux et/ou le dioxyde de carbone et/ou l'oxygène,
   * on ferme l'emballage, de préférence par soudure d'une paroi en matériau plastique étanche au gaz ;
- la quantité d'azote gazeux injecté dans l'emballage est telle qu'après fermeture de celui-ci, la concentration en azote gazeux dans le mélange gazeux présent dans l'emballage est supérieure à 5 % et inférieure à 95 %, de préférence supérieure ou égale à 20 % et inférieure à 80 %, donc inférieure à la teneur en azote de l'air ;
- la quantité de dioxyde de carbone introduite dans l'emballage est telle qu'après fermeture de celui-ci, la teneur ou concentration en dioxyde de carbone dans l'atmosphère gazeuse contenue dans l'emballage est supérieure à 5 % et inférieure à 95 %, de préférence au moins égale à 20 % et inférieure ou égale à 80 % ;
- la quantité d'oxygène introduite dans l'emballage est telle qu'après fermeture de celui-ci, la teneur ou concentration en oxygène dans l'atmosphère gazeuse contenue dans l'emballage est au moins égale à 20 % et inférieure ou égale à 80 %.

Selon un autre aspect, l'invention consiste à proposer un colis de mollusques bivalves vivants contenus dans un emballage sensiblement étanche au gaz, qui contient de l'azote gazeux, de préférence mélangé avec une quantité significative, c'est-à-dire nettement supérieure à celle présente dans l'air, de dioxyde de carbone.

Selon des modes préférentiels de réalisation :
- la teneur en azote basique volatil présent dans les mollusques est de l'ordre de 50 à 500 milligrammes par kilo de chair de mollusque, en particulier voisine de 50 à 250 milligrammes ;
- l'atmosphère gazeuse comporte :
   * de l'ordre de 20 % à 80 % d'azote,
   * de l'ordre de 20 % à 80 % de dioxyde de carbone ;
- l'emballage comporte une partie au moins transparente pour faciliter ou permettre le contrôle visuel des mollusques.

Les teneurs précisées ci-avant en pourcentage sont exprimées par rapport à la masse des composants gazeux.

Un avantage de l'invention est en outre de proposer des colis de mollusques vivants qui sont aptes à être utilisés pour présenter les mollusques sur le lieu de vente, en les préservant des agents (bactéries et poussières notamment) extérieurs ; à cet effet, l'emballage est de préférence de forme polyédrique, en particulier en forme de caisse parallélépipédique rectangle, dont au moins une face supérieure et/ou latérale est en partie au moins transparente ; l'emballage peut en outre présenter un deuxième compartiment, distinct du premier compartiment recevant les moules, qui reçoit un produit alimentaire, de préférence frais, apte à être consommé avec les moules, tel qu'un citron.

Placées dans un mélange gazeux de CO2 et N2 pouvant varier suivant l'état physiologique de l'animal ou suivant son origine, les coquillages (les moules en particulier) sont conservées pendant cinq jours au-delà de la date de conditionnement en donnant des résultats d'analyses microbiologiques conformes à ce qu'exigent les textes réglementaires actuellement en vigueur en matière de respect des critères autorisant la commercialisation des coquillages frais.

Ces résultats ont été confirmés par des analyses effectuées sur des moules emballées dans des conditionnements de deux, cinq ou dix kilos.

Les coquillages, notamment des moules, peuvent être conservées fraîches, grattées, nettoyées, prêtes à cuire pendant cinq jours au-delà de la date de fabrication.

Les avantages procurés par l'invention seront mieux compris à la lecture de la description ci-après.

Les coquillages grattés, nettoyés, calibrés suivant la grosseur de la coquille, sont acheminés par un tapis roulant vers une machine destinée à les ébarber s'il s'agit de moules ; c'est l'opération de débysussage qui consiste à arracher les filaments qui permettent à l'animal de se fixer sur un support - rocher ou corde -.

Les coquillages sont ensuite triés sur un tapis blanc afin d'éliminer les coquilles cassées, vides, ou mal nettoyées ainsi que les animaux morts.

Les moules sont placées dans un emballage sans adjonction d'eau de mer ou de produits conservateurs, dont on modifie l'atmosphère de telle sorte qu'après que le vide ait été réalisé à 98 % (+ ou - 1 %), on injecte un mélange gazeux composé de 20 % de CO2 et 80 % de N2 ; l'emballage est ensuite fermé par une feuille de matière plastique ; cette opération d'emballage sous atmosphère modifiée est de préférence réalisée en utilisant une machine thermoformeuse operculeuse.

On a répété l'expérience en injectant un mélange de 70 % de CO2 et 30 % de N2.

On a répété l'expérience en remplaçant le CO2 par de l'oxygène.

Dans tous les cas, on a procédé, après cinq jours de conservation à une température comprise entre 3°C et 8°C, à des analyses qui ont permis de vérifier l'absence de salmonelle et que la teneur en coliformes thermotolérants était inférieure à 300 pour 100 grammes.

On a par ailleurs constaté, en utilisant la méthode CONWAY, que la teneur en azote basique volatil était de l'ordre de 100 à 200 milligrammes par kilogramme de chair des moules.

## Revendications

1. Procédé de conservation de mollusques bivalves vivants dans un emballage étanche aux gaz, caractérisé en ce qu'on introduit de l'azote gazeux dans l'emballage.

2. Procédé selon la revendication 1, dans lequel on introduit du dioxyde de carbone, de préférence en mélange avec l'azote gazeux, ou bien dans lequel on introduit un mélange d'azote et d'oxygène gazeux en proportions différentes de celles présentes dans l'air.

3. Procédé selon l'une quelconque des revendications 1 ou 2, dans lequel les mollusques sont des moules et dans lequel on exécute successivement les opérations suivantes :
- on ébarbe et on nettoie les moules,
- on dispose les moules dans un emballage,
- on extrait l'air contenu dans l'emballage,
- on injecte l'azote gazeux et du dioxyde de carbone,
- on ferme l'emballage par une paroi en matériau plastique étanche au gaz,
- on maintient l'emballage contenant les moules à une température comprise entre 3°C et 8°C.

4. Procédé selon la revendication 3, dans lequel la quantité d'azote gazeux injecté dans l'emballage est telle que la concentration en azote gazeux dans le mélange gazeux présent dans l'emballage est supérieure à 20 % et inférieure à 80 %.

5. Procédé selon la revendication 3, dans lequel la quantité d'azote gazeux injecté dans l'emballage est telle que la teneur en azote basique volatil présent dans les mollusques est de l'ordre de 50 à 500 milligrammes par kilo de chair de mollusque.

6. Procédé selon l'une quelconque des revendications 4 ou 5, dans lequel la quantité de dioxyde de carbone introduite dans l'emballage est telle qu'après fermeture de celui-ci, la teneur en dioxyde de carbone dans l'atmosphère gazeuse contenue dans l'emballage est au moins égale à 20 % et inférieure ou égale à 80 %.

7. Procédé selon l'une quelconque des revendications 2 à 5, dans lequel la quantité d'oxygène introduite dans l'emballage est telle qu'après fermeture de celui-ci, la teneur ou concentration en oxygène dans l'atmosphère gazeuse contenue dans l'emballage est au moins égale à 20 % et inférieure ou égale à 80 %.

8. Colis de mollusques bivalves vivants contenus dans un emballage étanche aux gaz caractérisé en ce qu'il contient de l'azote gazeux, de préférence mélangé avec du dioxyde de carbone.

9. Colis selon la revendication 8, dans lequel la teneur en azote basique volatil présent dans les mollusques est de l'ordre de 50 à 500 milligrammes par kilo de chair de mollusque.

10. Colis selon l'une quelconque des revendications 8 ou 9, dont l'atmosphère gazeuse comporte :
- de 20 % à 80 % d'azote,
- de 20 % à 80 % de dioxyde de carbone,
et tel que l'emballage comporte une partie au moins transparente.
